# EUROPEAN PATENT APPLICATION

(11) **EP 3 301 638 A1**
(43) Date of publication of application: **04.04.2018**
(21) Application number: 17163165.8
(22) Date of filing: 27.03.2017
(51) Int. Cl.: G06Q 50/16, G06Q 30/02

(54) **METHOD FOR AUTOMATIC PROPERTY VALUATION**

(30) Priority: 29.09.2016 EP 16461557
(71) Applicant: Centorium Sp. z o.o., 00-446 Warszawa (PL)
(72) Inventor: Chachulski, Mateusz, 04-010 Warszawa (PL); Sobczak, Adam, 11-030 Purda (PL)
(74) Representative: Sielewiesiuk, Jakub

(57) **Abstract**

The object of the invention is a method for automatic property valuation in a system comprising:
• a user terminal, in the form of an electronic device with an implemented user interface, preferably in the form of a computer, a mobile phone or a tablet,
• a server equipped with a computational unit and having access to a database describing property prices,
• wherein the user terminal and the server can communicate with each other via a telecommunications network, preferably via the Internet,
in which the following steps are performed:
a) the user terminal receives a query about the property value from the user through the interface, wherein this query contains at least data on geographical location of the property and at least two parameters, i.e. at least a first parameter and a second parameter each of which describes a different characteristic than its geographical location,
b) the user terminal sends the query to the server,
c) the server, by means of the computational unit, calculates the value of the property, with the use of data from the database,
d) the server sends the calculated property value to the user terminal,
e) the user terminal shares the obtained property value in the user interface and/or directs this value to one or more of the following devices: a screen, in particular a touch screen, a printer, an internal memory storage, an external memory storage,
**characterised in that**
the database contains at least two maps describing the property value as a function of geographical location (so-called "heat maps"), wherein at least the first map is parametrised by the first non-geographical parameter, and the second map is parametrised by the second non-geographical parameter, and
in step c), the property value is calculated as a combination of values read at least from the first map and at least the second map for a given geographical location, with these maps having weights assigned thereto which were previously computed by means of a dedicated data mining model, and then for the set at least two non-geographical parameters, a correction of value for the unit area of the property is calculated by means of a dedicated data mining model.

## Description

The object of the invention is a method for automatic property valuation. More specifically, the invention relates to a valuation method in a system comprising:
- a user terminal, in the form of an electronic device with an implemented user interface, preferably in the form of a computer, a mobile phone or a tablet,
- a server equipped with a computing unit and having access to a database describing property prices,
- wherein the user terminal and the server can communicate with each other via a telecommunications network, preferably via the Internet.

In prior art solutions, automatic property valuation is based on data mining models, e.g. neural networks, decision trees, hedonic regression or the like. Typically, such models use a multidimensional set of parameters which includes data on, among others: location of the property, usable area, number of rooms, floor on which the property is located, age of the property, distance from the most desired utilities, such as e.g. shops, schools, hospitals. Each of the parameters is a property characteristic / attribute, after preparation of which a valuation model performs the process of 'learning' - estimates property prices according to set parameters, usually followed by validation of calculations and optionally correcting the model. The model learning process, i.e. building the model on a particular set of data, is a very computationally demanding process. It is a derivative of a large volume of input data and of computational complexity of algorithms (in particular, non-linear algorithms, i.e. neural networks). The process of building the model may last up to several hours.

Among the known solutions, there is a property valuation system known from the US patent application US2011196762A1 - according to the method described therein, the automatic valuation system cooperates closely with the users, improving the value of property valuation based on data dating several years back. Each user can indicate which property attributes are most important, and based on registered historical transactions, the current price is modified.

Another solution is presented in the application US2011295732A1 in which the automatic valuation mechanism is based on collecting a large amount of property value estimates, and then calculating a central tendency of obtained estimates and indicating it as the calculated price, along with granting more weight to sources that provide more similar calculations.

Another example is the application US2013282596A1 in which constantly updated coefficients are used for valuation, wherein the coefficients relate to special characteristics of the property, specific characteristics of the property environment, as well as sales dynamics. Specific arguments are then considered with different weights in the calculation of property value, creating a curve of the most probable price range.

Yet another approach is presented in the application US2015302488A1 in which property valuation is based on the analysis of user activity when browsing through offers, taking into account, among others, type of offers browsed through and time spent viewing them.

However, the indicated solutions require constant monitoring of a large number of information sources, and in addition, the calculation processes used therein are based on models that require additional methods for enhancing and accelerating calculations, e.g. through parallelisation. The basic idea for parallelising the valuation process is to prepare multiple valuation stations based on a copy of the same mathematical model. In many cases, the process of model building is paralleled by dividing (mostly geographically) data sets and by building multiple (geographically) independent models - such a procedure significantly reduces the resources needed for model learning. On the other hand, with geographical separation, each single model operates on a narrow set of data, and therefore potentially loses a part of information which can allow for a more accurate calculation of relationship between price and non-geographical characteristics.

It should be emphasised that the authors of the present invention are unaware of the case of using any hybrid model in which a single property would be valued using a number of intermediate results obtained by different classes of data models. More precisely - there is not any known approach in which, e.g., geographical characteristics describing the property would be the arguments of a single data model (e.g. hedonic models), and the remaining (non-geographical) characteristics would be the input arguments of other mathematical models (e.g. decision trees). In other words - there is not any known case of decomposition of a multidimensional set of attributes describing a property into two independent sets, and building, on these sets, independent data models in order to obtain a valuation for a single property. There is also not known approach in which data decomposition is performed through a set of characteristics describing a property either (many models, where input data are separate sets of characteristics describing the same property).

The object of the present invention is to provide faster and at the same time more accurate method of model learning and property valuation itself. This object is achievable through the use of sub-models for the layer of pre-calculated data.

A method for automatic property valuation in a system comprising:
- a user terminal, in the form of an electronic device with an implemented user interface, preferably in the form of a computer, a mobile phone or a tablet,
- a server equipped with a computational unit and having access to a database describing property prices,
- wherein the user terminal and the server can communicate with each other via a telecommunications network, preferably via the Internet,
in which the following steps are performed:
a) the user terminal receives a query about the property value from the user through the interface, wherein this query contains at least data on geographical location of the property and at least two non-geographical parameters, i.e. at least a first non-geographical parameter and a second non-geographical parameter, each of which describes a different characteristic than its geographical location,
b) the user terminal sends the query to the server,
c) the server, by means of the computational unit, calculates the value of the property, with the use of data from the database,
d) the server sends the calculated property value to the user terminal,
e) the user terminal shares the obtained property value in the user interface and/or directs this value to one or more of the following devices: a screen, in particular a touch screen, a printer, an internal memory storage, an external memory storage,
is characterised in that
the database contains at least two maps describing the property value as a function of geographical location (so-called "heat maps"), wherein at least the first map is parametrised by the first non-geographical parameter, and the second map is parametrised by the second non-geographical parameter, and
in step c), the property value is calculated as a combination of values read at least from the first map and at least the second map for a given geographical location, with these maps having weights assigned thereto which were previously computed by means of a dedicated data mining model, and then for the set at least two non-geographical parameters, a correction of value for the unit area of the property is calculated by means of a dedicated data mining model.

Preferably, in step c), two or more maps previously obtained and stored in the database are used.

Preferably, at least two parameters, referred to in step a), include two or more of the following characteristics: average price per unit of property area, especially per one square meter of property, quartile 75% of the average price per unit of property area, especially per one square meter of property, property area, usable area, number of rooms, floor on which the property is located, number of floors of the building, type of the building, age of the building.

Preferably, the query, referred to in step a), includes three or more non-geographical parameters each of which describes a different characteristic of the property than its geographical location, and the database contains three or more maps, parametrised by these non-geographical parameters, and in step c) the property value is calculated as a combination of values read at least from the three maps for a given geographical location, with these maps having weights assigned thereto and a correction resulting from the dedicated data mining model taking into account three or more indicated non-geographical parameters.

Preferably, the said dedicated data mining model is a model of hedonic regression, neural network or random forests.

Preferably, at least one of the maps in the database is updated without changing the other maps in the database.

Preferably, the sum of dimensions of all maps in the database is not higher than the sum of dimensions of all parameters set by the user in step a).

Preferably, step a) and step e) occur simultaneously.

Now, the invention will be presented in greater detail in a preferred embodiment, with reference to the accompanying drawings in which:

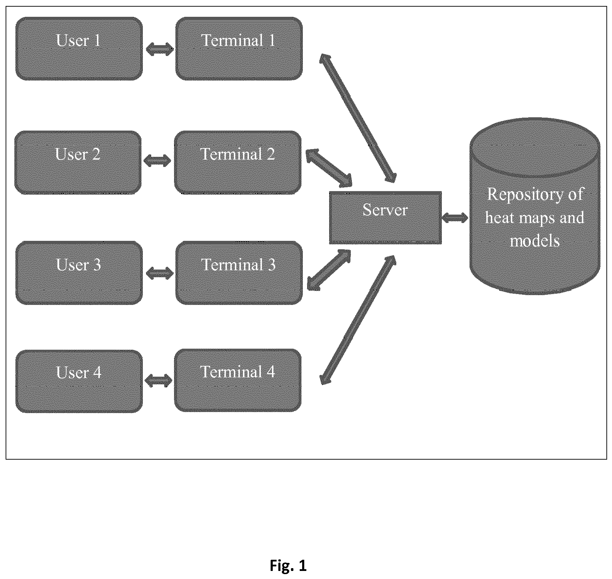

Fig. 1 shows a diagram of the system used to implement the method according to the invention,
Fig. 2 shows a block diagram illustrating the consecutive steps of the method according to the invention,
Fig. 3 shows the use of exemplary value maps used to determine the property value in one of the embodiments of the method according to the invention; hypothetical geographical coordinates are placed on the map axes.

### Preferred Embodiment of the Invention

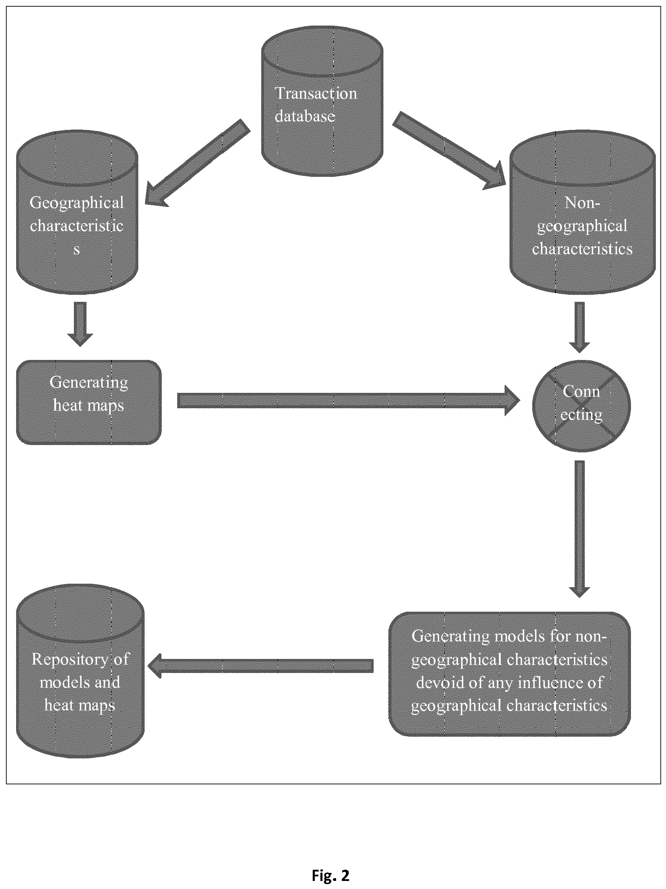

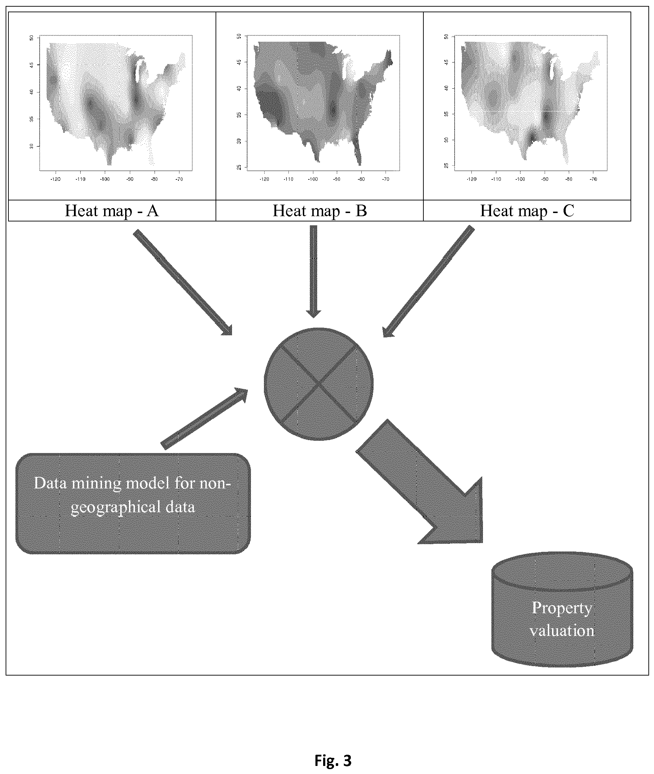

As part of the solution, the system for automatic evaluation is comprised of "layers" representing baseline levels of property values in given locations, and influence of other (than geographical) characteristics on the value. Independent classifiers/models are built, wherein input data are single selected sets of characteristics appropriate for each type of transaction. The model building process is shown in Fig. 2, and the property valuation process in Fig. 3.

The proposed process allows for a more efficient parallelisation of calculations. Parallelisation should be understood at the level of the number of attributes which describe the property (division of one multidimensional distribution into two distributions of smaller dimension). The authors are not familiar with any class of algorithms which would have linear computational complexity relative to the number of dimensions and the volume of data. The reduced number of attributes translates substantially into the reduction of necessary computing resources. This means that many models based on distributions having fewer dimensions will be built up significantly faster than a single one which is modelled on a set having a number of dimensions equal to the sum of those used to build many smaller ones.

Furthermore, the second data model - "second layer" is built for local markets, which makes it possible to take into account the varied impact of individual property characteristics on the value on individual markets, and also to quickly re-build, i.e. to update the model for a specific location.

The process of property valuation consists, consecutively, in:
1. Retrieving values from the kriging model, i.e. from the heat map, based on the geographical coordinates of the property valued.
2. Retrieving values from a model based on non-geographical information (taught with normalised data), based on numerical/descriptive characteristics of the property.
3. Adding values generated by two (in the simplest variant) models.

The following describes an example of obtaining maps which are then stored in the database, and are used for valuation according to the present invention.

For a given group of transactions describing the selected type of property, data preparation is provided in a manner that includes the following steps:
1. The basis for building is a transaction database containing data on historical transactions from the property market, including geographical information (relating to location and geographical coordinates) non-geographical information (transaction parameters and property characteristics).
2. Based on geographical data and unit price data, a kriging class model is built which estimates the average value of properties in a given geographical context. The input data for this model are primarily geographical coordinates and modelled transaction price per square meter.
3. The result of the operation of the kriging class model are "heat maps", describing geographically local characteristics of values: average price of property in a particular location, variance, deciles.
4. The obtained "heat maps" are used to normalise the actual transaction data, by subtracting, from the actual transaction value, a value resulting from the linear regression model of property price with regressors designated by the "heat maps" for given geographical coordinates (in the simplest case, it is subtracting the average value from the corresponding heat map and dividing the remainder by the values resulting from the heat map for standard deviation of price; in a more complicated case, it is subtracting the values of the data-mining class model build on the obtained heat maps). Maps illustrating individual component values are considered in the calculation. The input data of this process are real transactions. The result of this process are transactions with a price devoid of geographical component (the actual price reduced by matching of the linear regression model or another model of data-mining class; in other words, the remainder of the linear regression model).
5. Selection of significant variables (5a) and segmentation (5b) which may result from the selected variables are performed on such normalised data. The input data in this step are transactions with a price devoid of geographical component. The result of this process is a set of characteristics significant from the point of view of properties with prices devoid of component determined by geography, and possible decomposition resulting from the data segmentation. After this stage, the set of attributes describing transactions is devoid of variables which express longitude, latitude (or equivalents describing the location).
6. On normalised data, after selecting the significant variables, the second data model is built (in the case of successful segmentation of the model family), e.g. of random forest class, where the input arguments are all selected (non-geographical) characteristics describing the selected property type. The data of this process will be transaction data with a price devoid of geographical component and a set of attributes significant from the point of view of normalised price. If the segmentation process is successful - property segments.

The method for property valuation according to the present invention is fast enough to allow delivering the valuation result to the user who asked the query, in real time.

The advantage of the proposed solution over existing solutions is the use of partial results in models commonly referred to above as "heat maps". The heat maps prepared at the learning stage and appropriate mathematical models complementing these maps guarantee the reduction of resources needed for model learning and for valuation of a particular property by means of a proposed set of models, and taking into account the characteristics of precise location and neighbourhood to a greater extent than in traditional models.

In many cases, due to the cost of valuation services, it is desirable to have at least two valuations of a particular property - a less accurate one which can be published at a lower price, and a more accurate one for which a higher payment can be requested. Unfortunately, in most cases, this type of valuation sales model involves repeated calling up of the valuation process. The advantage of the proposed approach is that as part of the property valuation process, two valuations can be simultaneously generated: an approximate valuation (based on heat maps only) and an accurate valuation (based on heat maps and models taught with remainders). In one step, two pieces of information can be received, without having to use the valuation method twice. Considering the internal complexity of mathematical models, this type of approach will significantly reduce the time required to generate information.

### Exemplary test results

In order to verify the validity of the solution, the hybrid model (proposed approach) and the classic model of random forests were implemented. 19 models, separate for different locations, were built. The models were taught on the same selected data sets. For tests of both models, exactly the same test data were used. The following table summarizes the error measurement results for both models. The following lines of this table show the mean absolute percentage error (mape) of valuations with particular models.

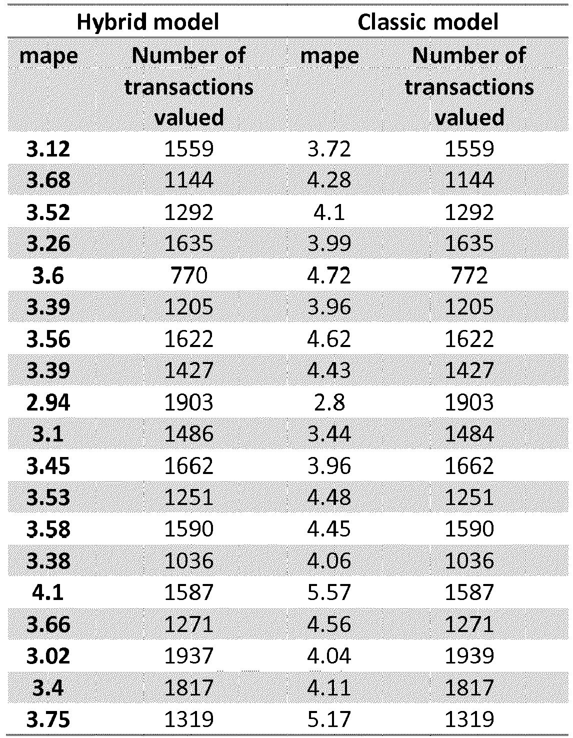

Accurate calculations of average weighted error are the following: 3.42% - hybrid model and 4.19% - classic model. In the series of tests conducted, the classic model turned out to be almost 20% worse than the proposed model which is the object of the invention.

## Claims

1. A method for automatic property valuation in a system comprising:
• a user terminal, in the form of an electronic device with an implemented user interface, preferably in the form of a computer, a mobile phone or a tablet,
• a server equipped with a computational unit and having access to a database describing property prices,
• wherein the user terminal and the server can communicate with each other via a telecommunications network, preferably via the Internet,
in which the following steps are performed:
a) the user terminal receives a query about the property value from the user through the interface, wherein this query contains at least data on geographical location of the property and at least two non-geographical parameters, i.e. at least a first non-geographical parameter and a second non-geographical parameter each of which describes a different characteristic than its geographical location,
b) the user terminal sends the query to the server,
c) the server, by means of the computational unit, calculates the value of the property, with the use of data from the database,
d) the server sends the calculated property value to the user terminal,
e) the user terminal shares the obtained property value in the user interface and/or directs this value to one or more of the following devices: a screen, in particular a touch screen, a printer, an internal memory storage, an external memory storage,
**characterised in that**
the database contains at least two maps describing the property value as a function of geographical location (so-called "heat maps"), wherein at least the first map is parametrised by the first non-geographical parameter, and the second map is parametrised by the second non-geographical parameter, and
in step c), the property value is calculated as a combination of values read at least from the first map and at least the second map for a given geographical location, with these maps having weights assigned thereto which were previously computed by means of a dedicated data mining model, and then for the set at least two non-geographical parameters, a correction of value for the unit area of the property is calculated by means of a dedicated data mining model.

2. The method according to claim 1, **characterised in that** in step c), two or more maps previously obtained and stored in the database are used.

3. The method according to claim 1 or 2, **characterised in that** at least two parameters, referred to in step a), include two or more of the following characteristics: average price per unit of property area, especially per one square meter of property, quartile 75% of the average price per unit of property area, especially per one square meter of property, property area, usable area, number of rooms, floor on which the property is located, number of floors of the building, type of the building, age of the building.

4. The method according to any one of the preceding claims, **characterised in that** the query, referred to in step a), includes three or more non-geographical parameters each of which describes a different characteristic of the property than its geographical location, and the database contains three or more maps, parametrised by these non-geographical parameters, and in step c) the property value is calculated as a combination of values read at least from the three maps for a given geographical location, with these maps having weights assigned thereto and a correction resulting from the dedicated data mining model taking into account three or more indicated non-geographical parameters.

5. The method according to any one of the preceding claims, **characterised in that** the said dedicated data mining model is a model of hedonic regression, neural network or random forests.

6. The method according to any one of the preceding claims, **characterised in that** at least one of the maps in the database is updated without changing the other maps in the database.

7. The method according to any one of the preceding claims, **characterised in that** the sum of dimensions of all maps in the database is not higher than the sum of dimensions of all parameters set by the user in step a).

8. The method according to any one of the preceding claims, **characterised in that** step a) and step e) occur simultaneously.
